# EUROPÄISCHE PATENTSCHRIFT

(11) **EP 1 780 345 B1**
(45) Veröffentlichungstag und Bekanntmachung des Hinweises auf die Patenterteilung: **22.06.2011**
(21) Anmeldenummer: 06121458.1
(22) Anmeldetag: 28.09.2006
(51) Int. Cl.: E04B 1/58, E04B 2/76

(54) **Verbinder für rinnenförmige Profilstäbe und Verbindungsanordnung**
Connector for u-shaped section members and connection assembly
Raccord pour profilés en forme de U et ensemble de raccordement

(30) Priorität: 27.10.2005 DE 202005016947 U
(43) Veröffentlichungstag der Anmeldung: 02.05.2007
(73) Patentinhaber: Viega GmbH & Co. KG, 57439 Attendorn (DE)
(72) Erfinder: Droste, Stefan, 57439 Attendorn (DE); Arens, Klaus, 57482 Wenden (DE)
(74) Vertreter: Cohausz & Florack

(56) Entgegenhaltungen:
- EP-A- 1 441 081
- DE-A1- 4 418 746
- DE-A1- 10 116 322
- FR-A- 2 472 130

## Beschreibung

Die vorliegende Erfindung betrifft einen Verbinder für rinnenförmige Profilstäbe, insbesondere zur Bildung von Sanitärinstallationen, mit zwei einander gegenüberliegenden Platten, die durch mindestens ein Befestigungsmittel und ein Zwischenstück miteinander verbunden sind und klemmend an einem rinnenförmigen Profilstab befestigbar sind, wobei an äußeren Kanten der Platten Vorsprünge ausgebildet sind, die in Eingriff mit an den Profilstäben ausgebildeten Nuten bringbar sind, wobei das Zwischenstück mindestens eine Stirnfläche aufweist, die in der Montagestellung des Verbinders an der Oberfläche zumindest eines der Profilstäbe anliegt, sowie eine Verbindungsanordnung mit einem solchen Verbinder.

Aus der DE 100 60 597 A1 ist ein Verbinder für Profilstäbe bekannt, der zwei Platten aufweist, die mit einer Schraube lösbar an wenigstens einem Profilstab befestigbar sind und dabei jeweils mit geneigten Spannflächen in Nuten von einem oder mehreren Profilstäben einfassen. Die beiden Platten des Verbinders sind von einer Feder auf einen bestimmten Abstand zueinander gehalten, so dass die Platten elastisch federnd in die Nuten der Profilstäbe einschnappbar sind.

Bei diesem bekannten Verbinder besteht der Nachteil, dass er sich nur an geschlossenen Profilstäben, die eine innere Hohlkammer besitzen, einsetzen lässt. Solche geschlossenen Profile lassen sich ohne Kern in einer Stanze oder Pressmaschine nur schlecht ablängen. Da die Profilstäbe in der Länge meist mehrere Meter lang sind, ist es nicht möglich, einen entsprechenden Kern von mehreren Metern in den Profilstab einzuschieben. Deshalb müssen geschlossene Profilstäbe aufwendig mittels einer Säge gekürzt werden, um eine Deformierung des Profilstabes im Bereich der Trennstelle zu vermeiden.

Für das Ablängen von Profilstäben ist es ferner bekannt, offene Profilstäbe vorzusehen, die an einer Seite zur Einführung eines Kerns geöffnet sind. Solche Profilstäbe, die auch als C-förmige Profile oder rinnenförmige Profilschienen bezeichnet werden, können dann entsprechend fixiert und abgelängt werden. Zusätzlich können auch erforderliche Bohrungen und Ausstanzungen vorgesehen werden. An der offenen Seite können diese Profilstäbe (Profilschienen) jedoch nicht mit einem Verbinder der aus der DE 100 60 597 A1 bekannten Art festgeklemmt werden, da die Profilstäbe hierfür keine ausreichende Stabilität besitzen.

In der EP 1 441 081 A2 ist ein Verbinder für offene Profilstäbe offenbart, der zwei einander gegenüberliegende Platten aufweist, die über eine Schraube und ein Zwischenstück miteinander verbunden und klemmend an einem offenen Profilstab festlegbar sind. Hierzu sind an äußeren Kanten der Platten Vorsprünge ausgebildet, die in Eingriff mit an dem Profilstab vorgesehenen Nuten bringbar sind. An dem Zwischenstück ist zwischen den äußeren Kanten der Platten mindestens ein hervorstehender Abstandshalter angeordnet, der zur Abstützung des Profilstabes zwischen zwei gegenüberliegenden Wandabschnitten des Profilstabes einfügbar ist. Der Abstandshalter ist dabei federnd ausgebildet und von einer hervorstehenden Position in eine zurückgezogene Position bewegbar.

Dieser bekannte Verbinder hat sich in der Praxis grundsätzlich gut bewährt. Es hat sich jedoch gezeigt, dass die funktionssichere Handhabung dieses Verbinders manchen Benutzern schwierig erscheint und insofern eine Unterweisung des Benutzern gegebenenfalls erforderlich wird.

Davon ausgehend liegt der vorliegenden Erfindung die Aufgabe zugrunde, einen Verbinder und eine Verbindungsanordnung zu schaffen, die sowohl für offene als auch geschlossene Profilstäbe eingesetzt werden können, wobei die funktionssichere Handhabung des Verbinders gegenüber dem Stand der Technik verbessert, insbesondere erleichtert sein soll.

Diese Aufgabe wird durch einen Verbinder mit den Merkmalen des Anspruchs 1 sowie durch eine Verbindungsanordnung mit den Merkmalen des Anspruchs 8 gelöst.

Nach einer ersten erfindungsgemäßen Ausführungsform sind in dem Zwischenstück zwei parallel zueinander verlaufende Spalte zur Aufnahme zweier gegenüberliegender Wandabschnitte des rinnenförmigen Profilstabes vorgesehen.

Nach einer (alternativen) zweiten Ausführungsform sind zwischen den Platten und dem Zwischenstück zwei parallel zueinander verlaufende Spalte zur Aufnahme zweier gegenüberliegender Wandabschnitte des rinnenförmigen Profilstabes vorgesehen, wobei die an die Oberfläche des Profilstabes anlegbare Stirnfläche des Zwischenstückes an einem brückenförmigen Abschnitt desselben ausgebildet ist, der im Wesentlichen biegestarr am Zwischenstück gehalten ist und parallel zueinander verlaufende Seitenflächen aufweist, die als Anlagenflächen für zwei gegenüberliegende Wandabschnitte des rinnenförmigen Profilstabes dienen.

Der erfindungsgemäße Verbinder kann somit insbesondere bei offenen, also rinnenförmigen Profilstäben eingesetzt werden, die auf der Baustelle wesentlich einfacher abgelängt und bearbeitet werden können als geschlossene Hohlprofile. Die gegenüberliegenden Wandabschnitte an der offenen Seite des rinnenförmigen Profilstabes können in die in dem Zwischenstück oder zwischen den Platten und dem Zwischenstück definierten Spalte eingefügt werden, so dass dann die Platten des Verbinders klemmend von außen auf den Profilstab gedrückt bzw. angezogen werden können, wobei das Zwischenstück dann die entstehenden Druckkräfte aufnehmen kann und eine größere Verformung des offenen Profilstabes verhindert. Dadurch können offene Profilstäbe verwendet werden, in die ein Kern einschiebbar ist, um ein einfaches Ablängen des Profilstabes insbesondere auf der Baustelle zu ermöglichen.

In einer bevorzugten Ausgestaltung des erfindungsgemäßen Verbinders ist vorgesehen, dass an Eckbereichen der Platten zusätzliche Vorsprünge ausgebildet sind, die in kraftschlüssigen Kontakt mit den in den Spalten aufgenommenen Wandabschnitten des rinnenförmigen Profilstabes bringbar sind. Hierdurch wird im Falle der Anordnung des Verbinders an der offenen Seite des Profilstabes eine besonders zuverlässige Verbindung zwischen dem Verbinder und dem offenen Profilstab erreicht.

Eine andere vorteilhafte Ausgestaltung des erfindungsgemäßen Verbinders sieht vor, dass das mindestens eine Befestigungsmittel, mit dem die Platten verbunden sind, als Spannhebelmechanismus ausgebildet ist. Der Verbinder lässt sich in dieser Ausgestaltung auch ohne Werkzeug schnell an den Profilstäben montieren.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Ansicht eines erfindungsgemäßen Verbinders gemäß einem ersten Ausführungsbeispiel im montierten Zustand;
- Fig. 2: eine perspektivische Ansicht entsprechend Fig. 1, wobei zur besseren Veranschaulichung von Einzelheiten des Zwischenstücks eine der beiden Platten des Verbinders fortgelassen ist;
- Fig. 3: eine geschnittene Seitenansicht des Verbinders der Fig. 1;
- Fig. 4: eine weitere perspektivische Ansicht des Verbinders der Fig. 1, wobei dieser zur besseren Veranschaulichung von Einzelheiten des Zwischenstücks in Verbindung mit nur einem offenen, C-förmigen Profilstab dargestellt ist;
- Fig. 5: eine perspektivische Ansicht eines erfindungsgemäßen Verbinders gemäß einem zweiten Ausführungsbeispiel im montierten Zustand;
- Fig. 6: eine perspektivische Ansicht entsprechend Fig. 5, wobei zur besseren Veranschaulichung von Einzelheiten des Zwischenstücks wiederum eine der beiden Platten des Verbinders fortgelassen ist;
- Fig. 7: eine perspektivische Ansicht eines erfindungsgemäßen Verbinders mit einem Spannhebelmechanismus gemäß einem dritten Ausführungsbeispiel;
- Fig. 8: eine perspektivische Ansicht des Verbinders der Fig. 7, wobei dessen Spannhebel gelöst ist;
- Fig. 9 und 10: zwei Seitenansichten des Verbinders der Fig. 7 mit zwei Profilstäben; und
- Fig. 11 und 12: zwei perspektivische Ansichten des Verbinders der Fig. 7 mit zwei Profilstäben, wobei in Fig. 11 zur Veranschaulichung von Einzelheiten des Zwischenstücks eine der beiden Platten und in Fig. 12 zur Veranschaulichung des Spannhebelmechanismus eine Hälfte des Zwischenstücks fortgelassen ist.

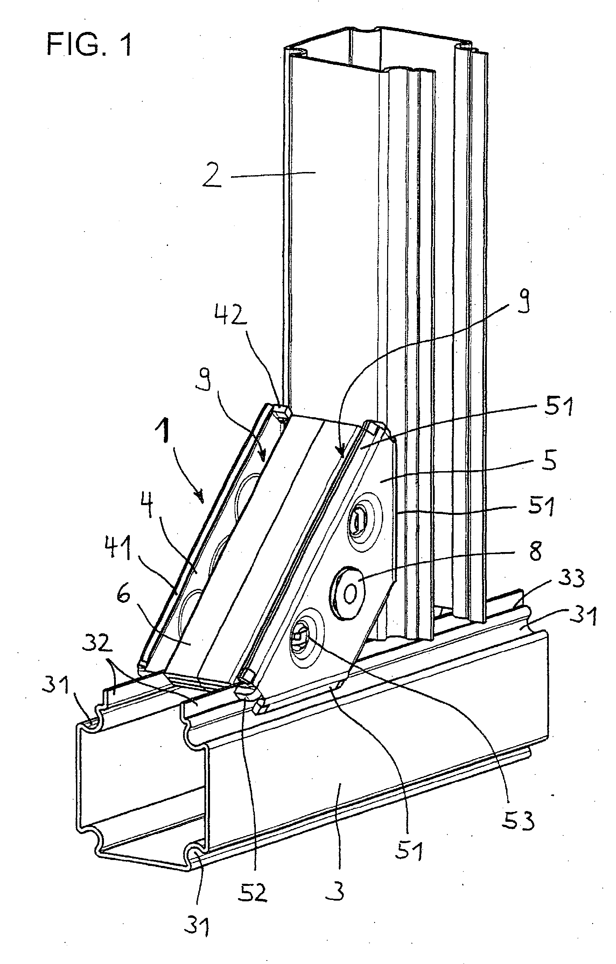

In den Figuren 1 bis 3 ist ein Verbinder 1 dargestellt, der an einem vertikalen Profilstab 2 und einem rechtwinklig dazu angeordneten horizontalen Profilstab 3 befestigt ist. Der Verbinder 1 umfasst zwei einander gegenüberliegende Platten 4 und 5 aus Metall, vorzugsweise aus Zink-Druckguss oder verzinktem Blech, und ein Zwischenstück 6 aus Kunststoff. Die Platten 4 und 5 sind mittels einer Schraube 7 verbunden, wobei an der Platte 5 der Kopf der Schraube und an der Platte 4 ein eingepresstes Gewinde oder eine Mutter 8 angeordnet sind.

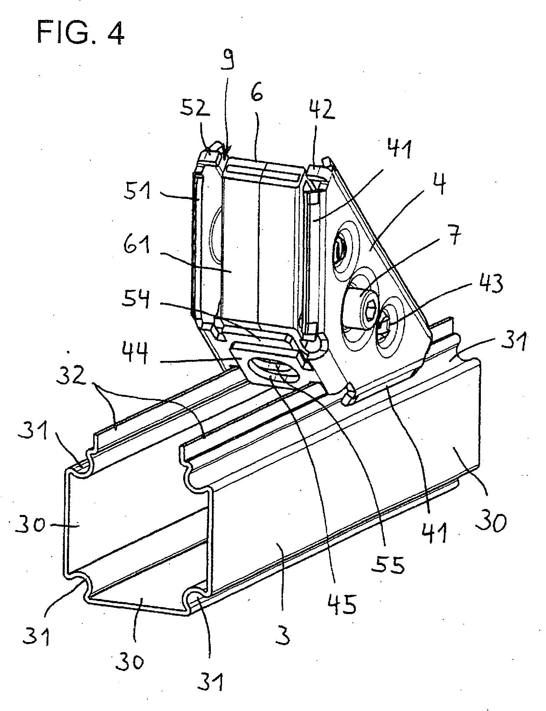

Der Profilstab 3 ist als offener, rinnenförmiger Profilstab ausgebildet und umfasst drei Seitenwände 30, die im Eckbereich jeweils eine rund ausgebildete Nut 31 besitzen (vgl. Fig.4). An der offenen Seite des Profilstabes 3 sind zwischen den Nuten 31 zwei nach außen vorspringende Stegabschnitte 32 ausgebildet. Zudem ist zwischen dem jeweiligen Stegabschnitt 32 und der dazu benachbarten Nut 31 eine in Längsrichtung des Profilstabes 3 verlaufende Kehle 33 ausgebildet. Der offene Profilstab 3 kann auch als C-förmiges Profil bezeichnet werden. Der Verbinder ist einerseits an der offenen Seite des horizontalen Profilstabes und andererseits an der geschlossenen Seite des vertikalen Profilstabes montiert, wobei die beiden Profilstäbe baugleich ausgebildet sind.

Zur Verbindung der beiden Profilstäbe 2 und 3 greifen an drei äußeren Kanten der Platten 4 und 5 vorgesehene Vorsprünge 41 und 51 in die Nuten 31 der Profilstäbe 2 und 3 ein und legen den Verbinder 1 somit an den Profilstäben klemmend fest.

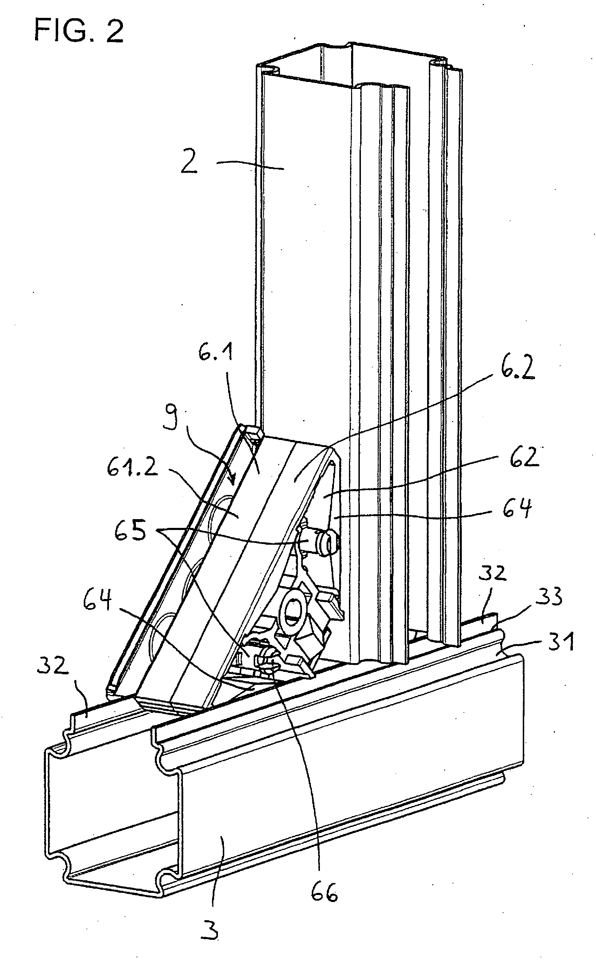

Die an der geschlossenen Oberfläche des Profilstabes 2 anlegbare Stirnfläche 61 des Zwischenstücks 6 ist an einem Abschnitt 62 desselben ausgebildet, der im Wesentlichen biegestarr am Zwischenstück 6 gehalten ist (vgl. Figuren 2 bis 4). Im Gegensatz zu dem aus der EP 1 441 081 A2 bekannten Verbinder weist der Verbinder 1 gemäß der vorliegenden Erfindung keinen federelastisch eindrückbaren Abstandshalter auf. Hierdurch sind die Konstruktion und die Herstellung des erfindungsgemäßen Verbinders 1 vereinfacht, so dass eine Verringerung der Herstellungskosten gegenüber dem bekannten Verbinder erzielt werden kann.

Die Stirnfläche 61 ist vorzugsweise als im wesentlichen ebene Anlagefläche ausgebildet. Das Zwischenstück 6 weist insgesamt drei solcher Stirnflächen 61 auf, und zwar zwei kürzere Stirnflächen 61 und eine längere Stirnfläche 61.2, wobei die beiden kürzeren Stirnflächen (Anlageflächen) 61 im wesentlichen rechtwinklig zueinander ausgebildet sind, während die längere Stirnfläche (Anlagefläche) 61.2 mit den beiden kürzeren Stirnflächen 61 jeweils einen Winkel von jeweils 45° einschließt.

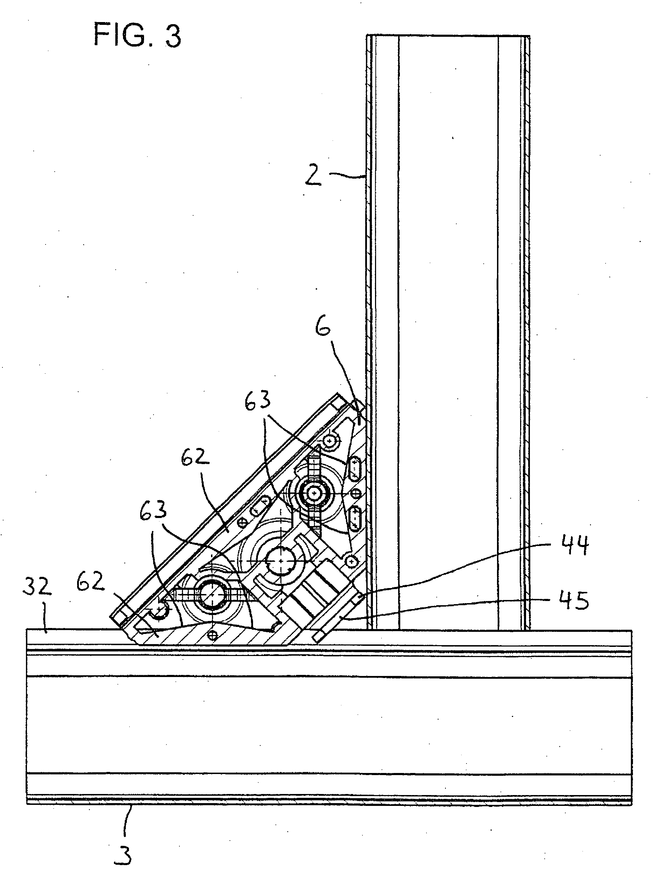

Erfindungsgemäß sind zwischen den Platten 4 und 5 und dem Zwischenstück 6 zwei parallel zueinander verlaufende Schlitze oder Spalte 9 zur Aufnahme der beiden gegenüberliegenden Stegabschnitte 32 des Profilstabes 3 vorgesehen. Die Stirnflächen 61 und 61.2 des Zwischenstücks 6, mit denen dieses an der geschlossenen Seite eines der zu verbindenden Profilstäbe 2 und 3 anlegbar ist, sind jeweils an brückenförmigen Abschnitten 62 des Zwischenstücks 6 ausgebildet. Wie besonders gut in Fig. 3 zu erkennen ist, ist der jeweilige brückenförmige Abschnitt 62 im mittleren Bereich seiner Spannweite verdickt ausgebildet. In dem dargestellten Ausführungsbeispiel weisen die Abschnitte 62 eine dachgiebelartige Form auf, wobei die innenliegenden Schrägflächen 63 nur relativ gering geneigt sind bzw. einen stumpfen Winkel bilden. Die beiden parallel zueinander verlaufenden, der Platte 4 bzw. 5 zugewandten Seitenflächen 64 des brückenartigen Abschnitts 62 dienen als Anlageflächen und sind im wesentlichen eben ausgebildet.

Das Zwischenstück 6 liegt mit den parallel zueinander verlaufenden Seitenflächen 64 eines brückenartigen Abschnitts 62 an den gegenüberliegenden Wandabschnitten, nämlich den nach außen vorspringenden Stegabschnitten 32 des Profilstabes 3 kraft- und formschlüssig an, so dass der Profilstab 3 an seiner offenen Seite durch Einfügung des Zwischenstücks 6 verstärkt ist. Durch Aufeinanderzuziehen der Platten 4 und 5 mittels der Schraube 7 können die nach außen vorspringenden Stegabschnitte 32 des Profilstabes 3 nur soweit zusammengedrückt werden, bis sie an dem Zwischenstück 6 oder - genauer gesagt - an dem brückenförmigen Abschnitt 62 anliegen.

Zusätzlich zu den an den Kanten der Platten 4 und 5 ausgebildeten Vorsprüngen 41 bzw. 51, die im montierten Zustand des Verbinders 1 in Nuten 31 der Profilstäbe eingreifen, sind an Eckbereichen der Platten 4 und 5 weitere Vorsprünge 42 und 52 ausgebildet, die durch Aufeinanderzuziehen der Platten 4 und 5 in kraftschlüssigen Kontakt mit den in den Spalten (Schlitzen) 9 aufgenommenen Wandabschnitten 32 des rinnenförmigen Profilstabes 3 bringbar sind. In Fig. 1 ist zu erkennen, dass der hakenförmig von der Platte abstehende Vorsprung 52 an der Außenseite des nach oben vorstehenden Stegabschnittes 32 anliegt. Insbesondere ist zu erkennen, dass die den Stegabschnitten 32 zugeordneten Vorsprünge 42 und 52 um etwa 90° gegenüber der Platte 4 bzw. 5 abgewinkelt sind, während die den Nuten 31 zugeordneten Vorsprünge 41 und 51 um einen geringeren Betrag, der im Bereich von etwa 40° bis 45° liegt, gegenüber der Platte 4 bzw. 5 abgewinkelt sind.

Die Platten 4 und 5 des Verbinders 1 weisen jeweils drei winklig zueinander angeordnete Kanten auf, die in einem Winkel von 45° bzw. 90° zueinander angeordnet sind. Dadurch kann der Verbinder 1 Profilstäbe 2 und 3 in Winkeln von 45° und 90° miteinander verbinden.

Das Zwischenstück 6 des Verbinders 1 ist vorzugsweise zweiteilig ausgebildet und umfasst eine ersten Hälfte 6.1 und eine zweite Hälfte 6.2, die ineinander steckbar sind (vgl. Fig. 2). Hierfür sind an einer Seite der Hälfte 6.1 Zapfen ausgebildet, die in gegenüberliegende Öffnungen der anderen Hälfte 6.2 eingreifen. An der anderen Hälfte 6.2 sind gleiche Zapfen ausgebildet, die dann in zugeordnete Öffnungen an der Hälfte 6.1 eingreifen. Die beiden Hälften 6.1 und 6.2 des Zwischenstückes sind baugleich ausgebildet und können somit mit nur einem Werkzeug gefertigt werden.

An den Platten 4 und 5 sind ferner Öffnungen 43 bzw. 53 vorgesehen, in die Rastmittel zur Vorfixierung der Platten an dem Zwischenstück 6 einfügbar sind. Dabei sind an der zur Platte 4 bzw. 5 gewandten Seite des Zwischenstückes 6 Zapfen 65 ausgebildet, die einen verdickten Endabschnitt aufweisen. Durch einen Schlitz 66 ist der verdickte Endabschnitt elastisch verformbar und kann somit in die Öffnung 43 bzw. 53 an der Platte 4 oder 5 eingefügt werden. Der verdickte Endabschnitt rastet dabei derart ein, dass die Platte 4 bzw. 5 vorfixiert an dem Zwischenstück 6 gehalten ist.

Ferner ist an einem oberen Abschnitt der Platten 4 und 5 jeweils ein rechtwinklig zur Platte 4 bzw. 5 abstehender Flansch 44 bzw. 54 ausgebildet, der mit einer Öffnung 45 bzw. 55 versehen ist. Hierdurch ergibt sich eine weitere Befestigungsmöglichkeit an dem Verbinder 1. Hierzu kann beispielsweise eine Mutter (nicht gezeigt) an dem Verbinder 1 eingelegt und eine entsprechende Schraube (nicht gezeigt) durch die Öffnung 45 in die Mutter eingedreht werden.

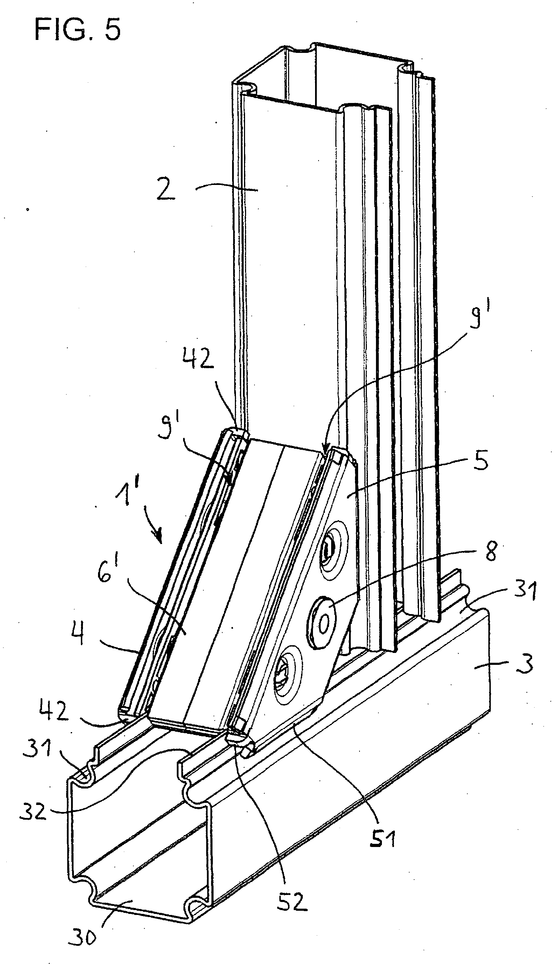

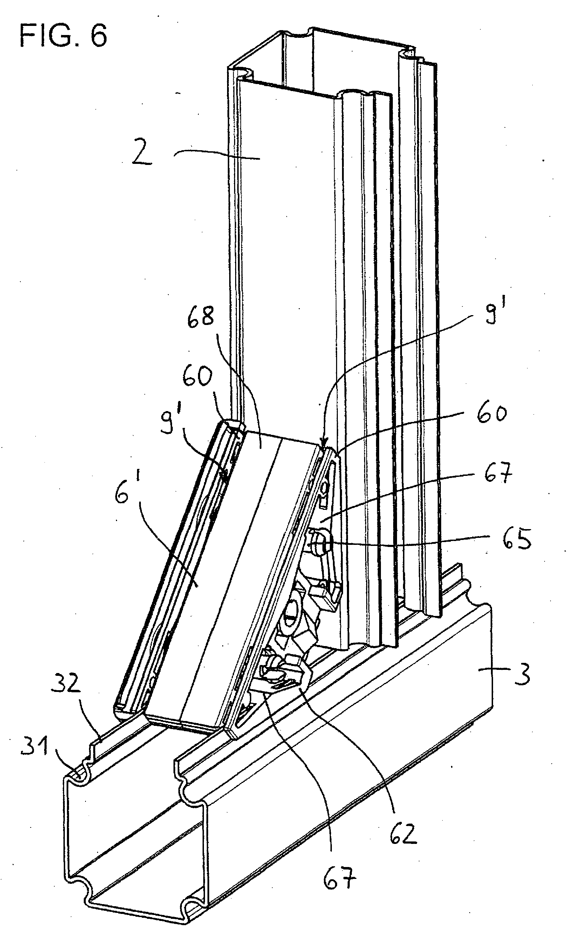

In den Figuren 5 und 6 ist ein zweites Ausführungsbeispiel des erfindungsgemäßen Verbinders 1' dargestellt, das sich von dem zuvor beschriebenen Ausführungsbeispiel dadurch unterscheidet, dass die Spalte (Schlitze) 9' zur Aufnahme der nach außen vorstehenden Stegabschnitte 32 des rinnenförmigen Profilstabes 3 nicht zwischen den Platten 4 und 5 und dem Zwischenstück 6', sondern in dem Zwischenstück 6' selbst ausgebildet sind. Dies ist am besten in Fig. 6 zu erkennen. Das Zwischenstück 6' weist somit in seinen Stirnflächen 61 und 61.2, mit denen es jeweils an einer geschlossenen Seite eines Profilstabes 2 anlegbar ist, parallel zueinander verlaufende Spalte (Schlitze) 9' auf. Die Spalte 9' erstrecken sich durch die brückenartigen Abschnitte 62 des Zwischenstücks 6, wobei die schmalen äußeren Randabschnitte 60 des Zwischenstücks über innenliegende Stege (Giebelkanten) 67 noch mit dem mittleren Abschnitt 68 des Zwischenstücks 6 verbunden sind.

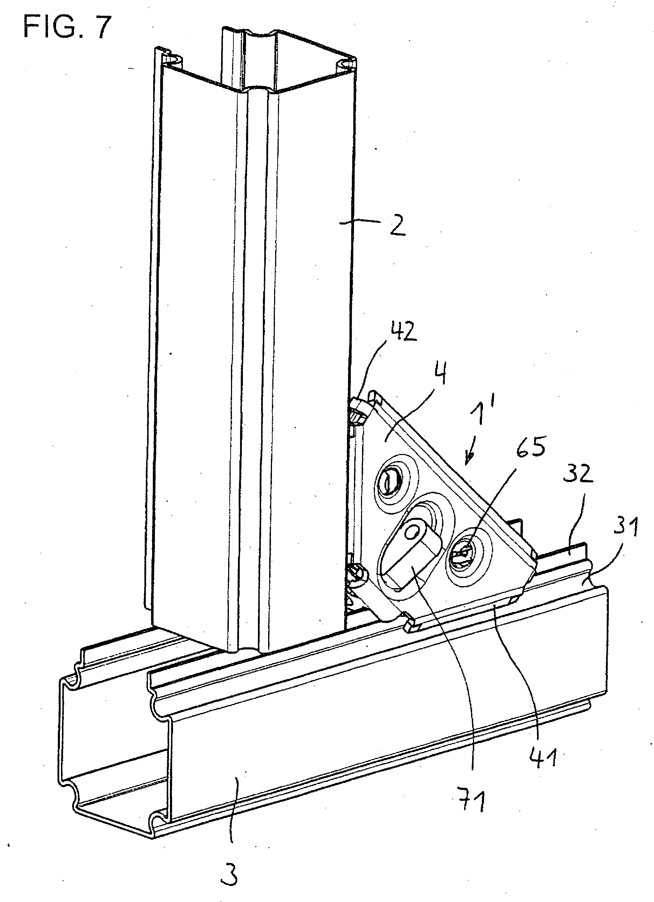

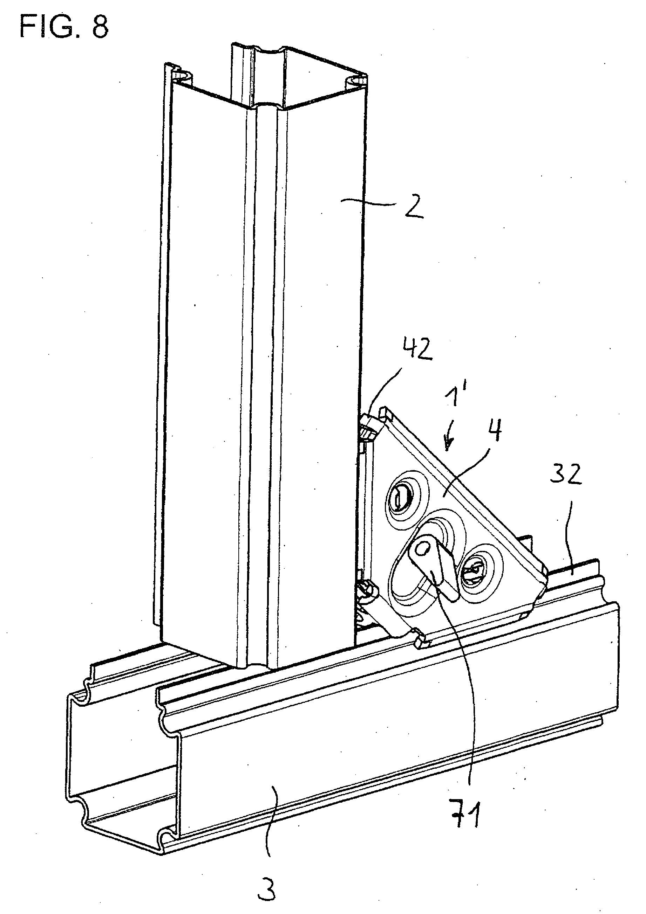

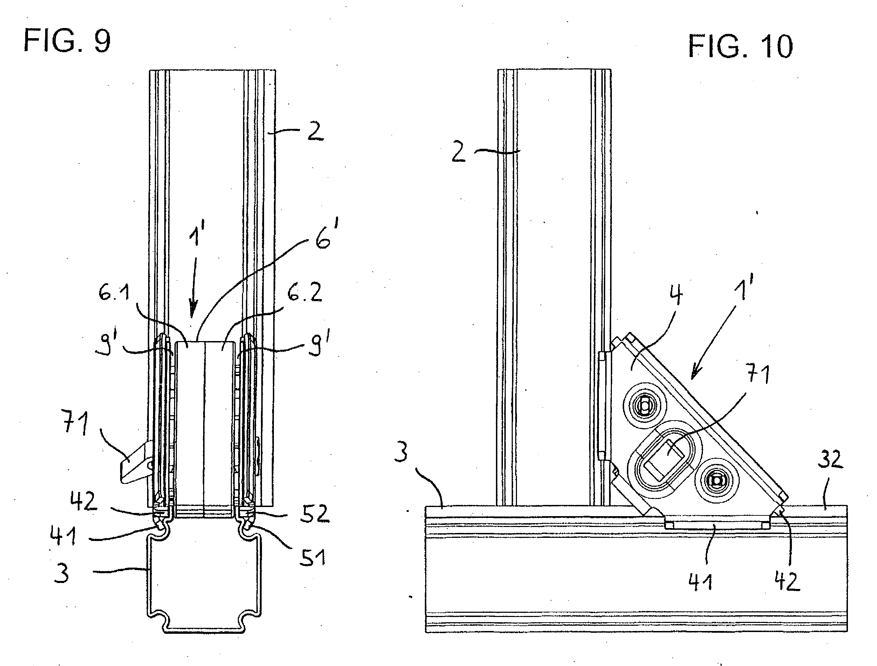

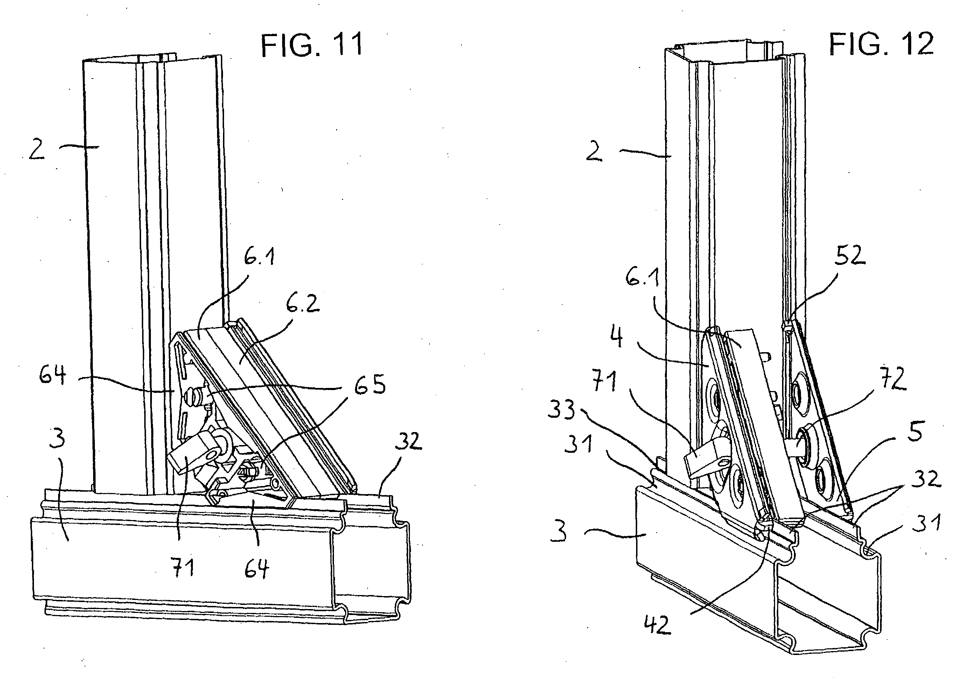

Bei dem in Fig. 4 dargestellten Ausführungsbeispiel ist als Befestigungsmittel zum klemmenden Festlegen des Verbinders 1 eine Innensechskantschraube 7 vorgesehen. In den Figuren 7 bis 12 ist eine vorteilhafte Alternative gezeigt, bei der das Befestigungsmittel, mit dem die Platten 4 und 5 verbunden sind, als Spannhebelmechanismus ausgebildet ist. Der Spannhebelmechanismus ist dabei aus einem bolzenförmigen Zugelement 72 und einem an einem Ende des Zugelements 72 gelenkig befestigten Hebel 71 gebildet.

## Patentansprüche

1. Verbinder (1, 1') für rinnenförmige Profilstäbe (2, 3), insbesondere zur Bindung von Sanitärinstallationen, mit zwei einander gegenüberliegenden Platten (4, 5), die durch mindestens ein Befestigungsmittel (7) und ein zwischenstück (6, 6') miteinander verbunden sind und klemmend an einem rinnenförmigen Profilstab (2, 3) befestigbar sind, wobei an äußeren Kanten der Platten Vorsprünge (41, 51) ausgebildet sind, die in Eingriff mit an den Profilstäben ausgebildeten Nuten (31) bringbar sind, wobei das zwischenstück (6, 6') mindestens eine Stirnfläche (61, 61.2) aufweist, die in einer Montagestellung des Verbinders (1) an der Oberfläche zumindest eines der Profilstäbe (2, 3) anliegt,
wobei entweder
a) in dem Zwischenstück (6') zwei parallel zueinander verlaufende Spalte (9') zur Aufnahme zweier gegenüberliegender Wandabschnitte (32) des rinnenförmigen Profilstabes (3) vorgesehen sind oder
b) zwischen den Platten (4, 5) und dem Zwischenstück (6) zwei parallel zueinander verlaufende Spalte (9) zur Aufnahme zweier gegenüberliegender Wandabschnitte (32) des rinnenförmigen Profilstabes (3) vorgesehen sind und die an die Oberfläche des Profilstabes (2) anlegbare Stirnfläche (61, 61.2) des Zwischenstückes (6) an einem brückenförmigen Abschnitt (62) desselben ausgebildet ist, der im Wesentlichen biegestarr am Zwischenstück (6) gehalten ist und parallel zueinander verlaufende Seitenflächen (64) aufweist, die als Anlagenflächen für zwei gegenüberliegende Wandabschnitte (32) des rinnenförmigen Profilstabes (3) dienen.

2. Verbinder nach Anspruch 1,
**dadurch gekennzeichnet, dass** dann, wenn in dem Zwischenstück (6') zwei parallel zueinander verlaufende Spalte (9') zur Aufnahme zweier gegenüberliegender Wandabschnitte (32) des rinnenförmigen Profilstabes (3) vorgesehen sind, die an die Oberfläche des Profilstabes (2) anlegbare Stirnfläche des Zwischenstückes (6') an einem Abschnitt (62) desselben ausgebildet ist, der im Wesentlichen biegestarr am Zwischenstück (6') gehalten ist.

3. Verbinder nach Anspruch 1 oder 2,
**dadurch gekennzeichnet, dass** die an die Oberfläche des Profilstabes (2) anlegbare Stirnfläche (61, 61.2) des Zwischenstückes (6, 6') an einem brückenförmigen Abschnitt (62) desselben ausgebildet ist, der im mittleren Bereich seiner Spannweite verdickt ist.

4. Verbinder nach Anspruch 1 oder 3,
**dadurch gekennzeichnet, dass** an Eckbereichen der Platten (4, 5) Vorsprünge (42, 52) ausgebildet sind, die in kraftschlüssigen Kontakt mit den in den Spalten (9, 9') aufgenommenen wandabschnitten (32) des rinnenförmigen Profilstabes (3) bringbar sind.

5. Verbinder nach Anspruch 4,
**dadurch gekennzeichnet, dass** die Vorsprünge (42, 52) hakenförmig ausgebildet sind.

6. Verbinder nach einem der Ansprüche 1 bis 5,
**dadurch gekennzeichnet , dass** dann, wenn in dem Zwischenstück (6') zwei parallel zueinander verlaufende Spalte (9') zur Aufnahme zweier gegenüberliegender Wandabschnitte (32) des rinnenförmigen Profilstabes (3) vorgesehen sind, das mindestens eine Befestigungsmittel, mit dem die Platten (4, 5) verbunden sind, als Spannhebelmechanismus ausgebildet ist.

7. Verbinder nach Anspruch 6,
**dadurch gekennzeichnet, dass** der Spannhebelmechanismus aus einem bolzenförmigen zugelement (72) und einem an einem Ende des Zugelements (72) gelenkig befestigten Hebel (71) gebildet ist.

8. Verbindungsanordnung mit mindestens zwei Profilstäben (2, 3), die über einen Verbinder (1, 1') nach einem der Ansprüche 1 bis 7 miteinander verbunden sind,
**dadurch gekennzeichnet, dass** mindestens einer der Profilstäbe (2, 3) ein rinnenförmig ausgebildeter Profilstab ist, der an seiner offenen Seite Eckbereiche aufweist, in denen jeweils eine Nut (31) ausgebildet ist, wobei die besagten Eckbereiche in nach außen vorspringende Stegabschnitte (32) übergehen, die zwischen den Nuten (31) angeordnet sind.

9. Verbindungsanordnung nach Anspruch 8,
**dadurch gekennzeichnet, dass** an dem rinnenförmig ausgebildeten Profilstab (2, 3) zwischen dem jeweiligen nach außen vorspringenden Stegabschnitt (32) und der dazu benachbarten Nut (31) eine in Längsrichtung des Profilstabes (2, 3) verlaufende Kehle (33) ausgebildet ist.

## Claims

1. Connector (1, 1') for trough-shaped profiled bars (2, 3), in particular for forming sanitary installations, comprising two opposing plates (4, 5) which are interconnected via at least one fastening means (7) and an intermediate piece (6, 6') and can be clamped to a trough-shaped profiled bar (2, 3), wherein projections (41, 51) are formed on outer edges of the plates and can be brought into engagement with grooves (31) formed on the profiled bars, the intermediate piece (6, 6') comprising at least one end face (61, 61.2) which rests against the surface of at least one of the profiled bars (2, 3) when the connector (1) is in the mounted position, wherein either
a) two slots (9') which extend parallel to one another for receiving two opposing wall portions (32) of the trough-shaped profiled bar (3) are provided in the intermediate piece (6') or
b) two slots (9) which extend parallel to one another for receiving two opposing wall portions (32) of the trough-shaped profiled bar (3) are provided between the plates (4, 5) and the intermediate piece (6), and the end face (61, 61.2) of the intermediate piece (6), which end face can be positioned on the surface of the profiled bar (2), is formed on a bridge-shaped portion (62) of said intermediate piece, which bridge-shaped portion is held substantially flexurally rigid on the intermediate piece (6) and comprises side faces (64) which extend parallel to one another and serve as contact surfaces for the two opposing wall portions (32) of the trough-shaped profiled bar (3).

2. Connector according to claim 1, **characterised in that**, if two slots (9') which extend parallel to one another for receiving two opposing wall portions (32) of the trough-shaped profiled bar (3) are provided in the intermediate piece (6'), the end face of the intermediate piece (6'), which end face can be positioned on the surface of the profiled bar (2), is formed on a portion (62) of said intermediate piece which is held substantially flexurally rigid on the intermediate piece (6').

3. Connector according to claim 1 or claim 2, **characterised in that** the end face (61, 61.2) of the intermediate piece (6, 6'), which end face can be positioned on the surface of the profiled bar (2), is formed on a bridge-shaped portion (62) of said intermediate piece, which bridge-shaped portion is thickened in the central region of its span width.

4. Connector according to claim 1 or claim 3, **characterised in that** projections (42, 52) are formed on corner regions of the plates (4, 5) and can be brought into non-positive contact with the wall portions (32) of the trough-shaped profiled bar (3), which are received in the slots (9, 9').

5. Connector according to claim 4, **characterised in that** the projections (42, 52) are hook-shaped.

6. Connector according to any one of claims 1 to 5, **characterised in that**, if two slots (9') which extend parallel to one another for receiving two opposing wall portions (32) of the trough-shaped profiled bar (3) are provided in the intermediate piece (6'), the at least one fastening means which connects the plates (4, 5) is formed as a tension lever mechanism.

7. Connector according to claim 6, **characterised in that** the tension lever mechanism is made up of a bolt-shaped tension element (72) and a lever (71) which is articulated to an end of the tension element (72).

8. Connection assembly comprising at least two profiled bars (2, 3) which are interconnected via a connector (1, 1') according to any one of claims 1 to 7, **characterised in that** at least one of the profiled bars (2, 3) is a trough-shaped profiled bar which comprises corner regions on the open side thereof, in each of which corner regions a groove (31) is formed, said corner regions transitioning into outwardly projecting web portions (32) which are arranged between the grooves (31).

9. Connection assembly according to claim 8, **characterised in that** a chamfer (33) which extends in the longitudinal direction of the profiled bar (2, 3) is formed on the trough-shaped profiled bar (2, 3) between the respective outwardly projecting web portion (32) and the groove (31) adjacent thereto.

## Revendications

1. Raccord (1, 1') pour barres profilées en forme de gouttières (2, 3), en particulier pour la réalisation d'installations sanitaires, avec deux plaques (4, 5) opposées l'une à l'autre, qui sont reliées ensemble par au moins un moyen de fixation (7) et une pièce intermédiaire (6, 6'), et qui peuvent être fixées par serrage sur une barre profilée en forme de gouttière (2, 3), sachant que, sur les bords extérieurs des plaques, sont formées des saillies (41, 51), qui peuvent s'engager dans des rainures (31), qui sont formées sur les barres profilées, la pièce intermédiaire (6, 6') présentant au moins une face frontale (61, 62.2), qui, dans une position de montage du raccord (1), porte contre la surface d'au moins l'une des barres profilées (2, 3),
sachant que
a) deux fentes (9'), qui s'étendent parallèlement l'une à l'autre, sont prévues dans la pièce intermédiaire (6') pour recevoir deux sections de parois (32) de la barre profilée en forme de gouttière (3), opposées l'une à l'autre,
ou que
b) deux fentes (9), qui s'étendent parallèlement l'une à l'autre, sont prévues entre les plaques (4, 5) et la pièce intermédiaire (6, 6') pour recevoir deux sections de parois (32) de la barre profilée en forme de gouttière (3), opposées l'une à l'autre, et que la face frontale (61, 62.2) de la pièce intermédiaire (6, 6'), qui peut être amenée contre la surface de la barre profilée (2) en forme de gouttière (3), est formée sur une section (62) de celle-ci, qui, présentant la forme d'une patte, est maintenue, sensiblement rigide à la flexion, sur la pièce intermédiaire (6), et présente des faces latérales (64) parallèles, qui servent de surfaces d'appui pour deux sections de paroi (32) de la barre profilée en forme de gouttière (3) opposées l'une à l'autre.

2. Raccord selon la revendication 1, **caractérisé en ce que**, quand deux fentes (9'), qui s'étendent parallèlement l'une à l'autre, sont prévues pour la réception de deux sections de parois (32) de la barre profilée en forme de gouttière (3), opposées l'une à l'autre, la face frontale de la pièce intermédiaire (6'), pouvant être appliquée contre la surface de la barre profilée (2), est formée sur une section (62) de celle-ci, qui est maintenue, sensiblement rigide à la flexion, sur la pièce intermédiaire (6').

3. Raccord selon la revendication 1 ou 2, **caractérisé en ce que** la face frontale (61, 61.2) de la pièce intermédiaire (6, 6'), qui peut être appliquée contre la surface de la barre profilée (2), est formée sur une section en forme de patte (62) de celle-ci, qui présente un épaississement dans la région centrale de son étendue.

4. Raccord selon la revendication 1 ou 3, **caractérisé en ce que**, dans les zones angulaires des plaques (4, 5), sont formées des saillies (42, 52), qui peuvent être mises en contact par adhérence avec les sections de parois (32) de la barre profilée en forme de gouttière (3), reçues dans les fentes (9, 9').

5. Raccord selon la revendication 4, **caractérisé en ce que** les saillies (42, 52) sont réalisées en forme de crochets.

6. Raccord selon l'une des revendications 1 à 5, **caractérisé en ce que**, quand, dans la pièce intermédiaire (6'), deux fentes (9'), qui s'étendent parallèlement l'une à l'autre, sont prévues pour la réception de deux sections de parois (32) de la barre profilée en forme de gouttière (3), opposées l'une à l'autre, le moyen de fixation au moins prévu, par l'intermédiaire duquel les plaques (4, 5) sont reliés ensemble, est réalisé en tant que mécanisme à levier de serrage.

7. Raccord selon la revendication 6, **caractérisé en ce que** le mécanisme à levier de serrage est formé par un élément de traction (72) en forme de boulon et par un levier (71), qui est fixé de manière articulée à une extrémité de l'élément de traction (72).

8. Ensemble de raccordement avec au moins deux barres profilées (2, 3), qui sont reliées ensemble au moyen d'un raccord (1, 1') selon l'une des revendications 1 à 7, **caractérisé en ce que** l'une des barres profilées, au moins, est une barre profilée en forme de gouttière, qui, sur son côté ouvert, est doté de zones angulaires, dans chacune desquelles est formée une rainure (31), lesdites zones angulaires se confondant avec des sections en forme de pattes (32), en saillie vers l'extérieur, qui sont disposées entre les rainures (31).

9. Ensemble de raccordement selon la revendication 8, **caractérisé en ce que**, sur la barre profilée en forme de gouttière (2, 3), entre la section en forme de patte (32), en saillie vers l'extérieur, et la rainure (33) y adjacente, est formée une gorge (33), qui s'étend dans la direction longitudinale de la barre profilée (2, 3).
